# EUROPÄISCHE PATENTSCHRIFT

(11) **EP 2 676 054 B1**
(45) Veröffentlichungstag und Bekanntmachung des Hinweises auf die Patenterteilung: **04.03.2015**
(21) Anmeldenummer: 12712551.6
(22) Anmeldetag: 20.01.2012
(51) Int. Cl.: F16J 15/34

(54) **GLEITRINGDICHTUNG**
SLIDE RING SEAL
JOINT D'ÉTANCHÉITÉ PAR BAGUE GLISSANTE

(30) Priorität: 17.02.2011 DE 102011011475
(43) Veröffentlichungstag der Anmeldung: 25.12.2013
(73) Patentinhaber: Federal-Mogul Burscheid GmbH, 51399 Burscheid (DE)
(72) Erfinder: DENGLER, Andreas, 86316 Friedberg (DE)
(74) Vertreter: Döpp, Ludger
(86) Internationale Anmeldenummer: PCT/DE2012/000050
(87) Internationale Veröffentlichungsnummer: WO 2012/110016

(56) Entgegenhaltungen:
- DE-A1- 2 746 594
- DE-A1- 19 955 860
- US-A- 4 256 315

## Beschreibung

Die Erfindung betrifft eine Gleitringdichtung, insbesondere Laufwerkdichtung, gemäß gattungsbildendem Teil des ersten Patentanspruchs.

Bei Laufwerkdichtungen mit Gummitrapezringen bewirkt eindringender Schmutz unter hohem Druck (z.B. Kurvenfahrt einer Kettenraupe) eine Axialkraftbeeinflussung der Gummitrapezringe. Eine entgegengesetzt zu der benötigten Schließkraft wirkende Kraft kann die Schließkraft bewirkende Axialkraft nicht nur reduzieren, sondern auch vollständig aufheben, so dass Schmutz durch den Dichtspalt der Gleitringdichtung beispielsweise in ein nachgelagertes Getriebe eindringen kann. Eine Krafterhöhung kann durch den Reibleistungsanstieg zur Überhitzung und somit zur Schädigung der Dichtung führen.

Diese Problematik ist seit langem bekannt, wobei Getriebeverschleiß bzw. Getriebeausfälle wegen Dichtungsversagen nicht hinnehmbar sind.

Ein erster Lösungsansatz wird in der gattungsgemäßen DE 199 55 860 A1 beschrieben. Die hier offenbarte Gleitringdichtung, insbesondere Laufwerkdichtung, besteht aus einem winkelförmigen Gleit- und/oder Gegenring mit einer zur Aufnahme eines ringförmigen, im Querschnitt etwa tellerförmigen Dichtkörpers bestimmten Umfangsfläche, wobei der Dichtkörper eine in den Bereich des Dichtschenkels geführte Sekundärdichtung beinhaltet. Bei diesem Lösungsansatz hat sich gezeigt, dass bei Schmutzangriff von außen ein Einklappen der Sekundärdichtlippe erfolgt und somit die gleiche Problematik, wie vorab beschrieben, gegeben ist.

Der US 4,256,315 ist eine Gleitringdichtung, insbesondere eine Laufwerkdichtung zu entnehmen, die in Analogie zur DE 199 55 860 A1 ebenfalls mit einer Sekundärdichtung versehen ist. Selbige liegt entweder zu Teilen auf der äußeren Umfangsfläche des Gleit- bzw. Gegenringes oder aber vollflächig darauf auf. Auch hier lässt es sich nicht vermeiden, dass die durch Schmutzeintritt bewirkten Axialkräfte ein Öffnen der Gleitringdichtung mit nachteiligem Schmutzeintritt bewirken.

Der Erfindung liegt die Aufgabe zugrunde, eine Gleitringdichtung, insbesondere eine Laufwerkdichtung, dahingehend weiterzubilden, dass, unabhängig vom eintretenden Schmutz, keine Reduzierung der benötigten Schließkraft der Dichtung bewirkt wird, wodurch die Standzeit, einerseits der Dichtung und andererseits nachgeschalteter Bauteile, wie beispielsweise Getriebebauteile, erhöht ist.

Diese Aufgabe wird dadurch gelöst, dass auf der dem Profil radial gegenüberliegenden Seite des Ansatzes eine dem Profil in etwa entsprechende Kontur eingebracht ist.

Vorteilhafte Weiterbildungen des Erfindungsgegenstandes sind dem einzigen Unteranspruch zu entnehmen.

Der in Analogie, insbesondere zur US 4,256,315, ebenfalls eine Sekundärdichtung bildende Ansatz, der ein mehrere Schmutzlippen bildendes Profil aufweist, kann nun durch den eindringenden Schmutz nicht mehr so weit verschoben werden, dass die zum Schließen der Dichtung benötigte Schließkraft reduziert wird.

Die gekammerte Profilierung kann nach Art eines Labyrinths ausgebildet sein, so dass auch in das Labyrinth eindringender Schmutz sich eher verfestigt, als dass er in Richtung nachgeschalteter Bauteile, wie beispielsweise Getriebekomponenten, weitertransportiert werden kann.

Dass die Schmutzlippen bildende Profil kann als Wellenprofil ausgebildet werden.

Vorteilhafterweise sind die Schmutzlippen im Querschnitt dreieckig oder viereckig ausgebildet.

Vielfach werden Gleit- und Gegenringe einer Gleitringdichtung, insbesondere einer Laufwerkdichtung, in Gehäuseelemente integriert. Um auch hier eine gute statische Abdichtung gegenüber dem aufnehmenden Gehäuseteil zu bewirken, wird darüber hinaus vorgeschlagen, auf der dem Profil radial gegenüberliegenden Seite des Ansatzes eine dem Profil in etwa entsprechende Kontur vorzusehen, die mit der Gegenfläche des aufnehmenden Gehäuseelements in Wirkverbindung steht.

Infolge der vorgeschlagen Geometrie der Sekundärdichtung wird ein Falten, respektive Verformen, der Sekundärdichtung durch Schmutzkraftangriff, sicher verhindert. Die vorgeschlagene Geometrie leitet die angreifende Schmutzkraft direkt in das jeweilige Gehäuseelement ab, so dass keine weiteren Auswirkungen auf die Dichtung selber entstehen können. Infolge der starken radialen Verstauchung der Sekundärdichtung wird die Zentrierung der Gleitringe sogar noch verbessert und das Haltemoment des Gleit- und/oder Gegenringes zum jeweiligen Gehäuseelement und Elastomer erhöht.

Mit der erfindungsgemäßen Ausgestaltung kann somit nicht nur die Standzeit der Dichtung, sondern darüber hinaus auch die der nachgeordneten Bauteile, wie beispielsweise Getriebekomponenten, beträchtlich erhöht werden.

Der Anmeldungsgegenstand ist anhand eines Ausführungsbeispiels in der Zeichnung dargestellt und wird wie folgt beschrieben. Es zeigen:
- Figur 1: Laufwerkdichtung im Schnitt in der Position vor der Montage;
- Figur 2: Laufwerkdichtung im Schnitt in der Position nach der Montage.

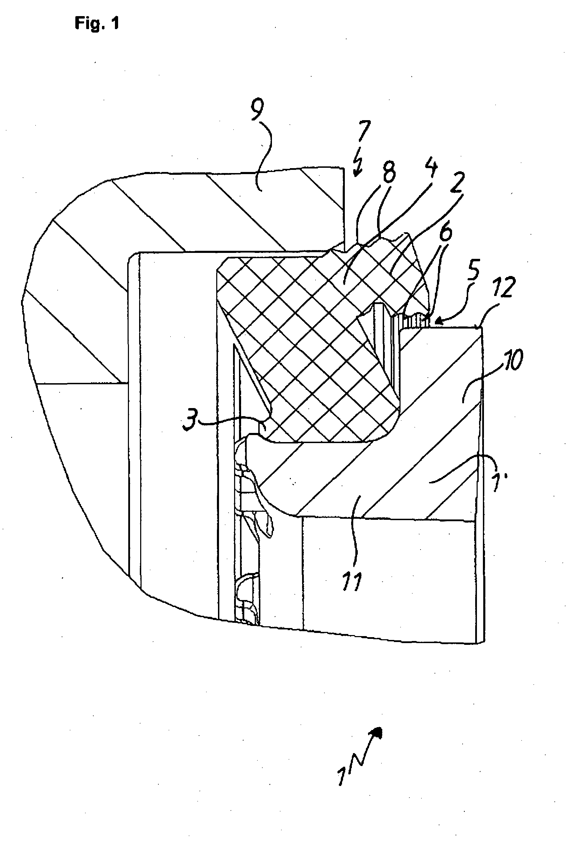

Figur 1 zeigt einen Schnitt durch eine als Laufwerkdichtung ausgebildete Gleitringdichtung 1 in der Position vor der Montage, beinhaltend einen aus Elastomermaterial hergestellten Dichtkörper 2. Der Dichtkörper 2 weist einen im Querschnitt etwa trapezförmig ausgebildeten umlaufenden Grundkörper auf, an welchem, in Umfangsrichtung gesehen, sich in radialer und axialer Richtung erstreckende Ansätze 3 einstückig angeformt sind. Diese Ansätze 3 bilden eine spätere Verdrehsicherung für die Gleitringdichtung 1. Ebenfalls einstückig aus dem Dichtkörper 2 herausgeformt, ist ein in axialer Richtung sich erstreckender als Ansatz ausgebildeter Axialschenkel 4. Der Ansatz 4 verfügt über an seiner inneren Umfangsfläche 5 eingebrachte, Schmutzlippen bildende, Profile 6, über welche er sich auf einem Gleitring 1' abstützt. Bedarfsweise kann das Profil 6 als Labyrinth oder aber als Wellenprofil mit unterschiedlichen geometrischen Konturen ausgebildet werden. Der Axialschenkel 4 bildet somit eine Sekundärdichtung. Auf der dem Profil 6 radial gegenüber liegenden äußeren Umfangsfläche 7 des Ansatzes 4 sind weitere Profile 8 in Form von Erhebungen eingebracht, die, eine statische Dichtung bildend, mit einem den Gleitring 1'aufnehmenden Gehäuseelement 9 in Wirkverbindung stehen. Der Gleitring 1'verfügt über einen Radialschenkel 10 und einen Axialschenkel 11. Der Ansatz 4 liegt im Einbauzustand auf der radial äußeren Umfangsfläche 12 des Gleitrings 1' mit seinem Schmutzlippen bildenden Profil 6 auf. Dargestellt ist der Zustand, in welchem der Gleitring 1' samt Dichtkörper 6 in das Gehäuseelement 9 eingepresst werden soll.

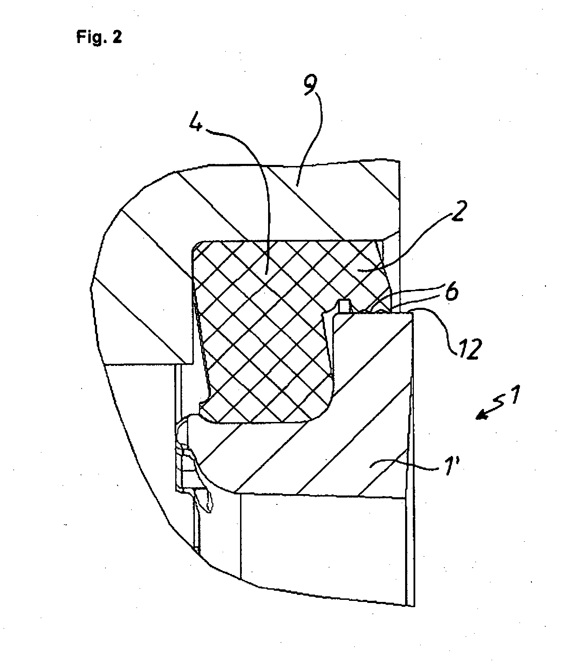

Figur 2 zeigt die Gleitringdichtung 1 in der Position nach der Montage. Erkennbar ist neben dem Gleitring 1' und dem Dichtkörper 2 auch das Gehäuselement 9. Ferner erkennbar ist das Schmutzlippen bildende Profil 6, welches auf der äußeren Umfangsfläche 12 des Gleitrings 1' aufliegt. Die Kontur der in Figur 1 dargestellten äußeren Umfangsfläche 7 des Ansatzes 4 ist hier nicht mehr erkennbar, da infolge der axialen Einpressung des Dichtkörpers 2 in die Aufnahmebohrung des Gehäuseelements 9 das vorstehende Elastomermaterial 8 in die vertieften Bereiche ausgewichen ist.

Schmutz, der in Richtung des Ansatzes 4 vordringen sollte, kann infolge des Profils 6 nun nicht mehr zu einer Verschiebung, respektive Verformung des Ansatzes 4, führen. Die vorgestellte Geometrie des Dichtkörpers 2 leitet die angreifende Schmutzkraft direkt in das die Gleitringdichtung 1 umgebende Gehäuse 9 ab, so dass keine weiteren Auswirkungen auf die Gleitringdichtung 1, respektive den Gleitring 1', entstehen können. Infolge der starken radialen Verstauchung des Ansatzes 4 wird die Zentrierung des Gleitrings 1' sogar noch verbessert, wobei das Haltemoment des Gleitrings 1' innerhalb des Gehäuseelements 9 zum jeweiligen Gehäuseelement 9 erhöht wird. Die Standzeit einerseits der Gleitringdichtung 1' und andererseits der nachgeordneten Komponenten wird somit beträchtlich erhöht.

## Patentansprüche

1. Gleitringdichtung zumindest bestehend aus einem winkelförmigen Gleit- (1') und/oder Gegenring, dessen radialer Schenkel (10) einen Gleitbereich und dessen axialer Schenkel (11) eine Aufnahme für einen trapezförmig ausgebildeten Dichtkörper (2) bildet, der radial außerhalb des Gleitbereichs mit einem, den Radialschenkel (10) zumindest partiell übergreifenden, eine Sekundärdichtung bildenden, Ansatz (4) versehen ist, wobei der Ansatz (4) zumindest im Bereich des Radialschenkels (10) mit einem sich im Einbauzustand der Gleitringdichtung auf der äußeren Umfangsfläche (12) des Radialschenkels (10) abstützenden, in axialer Richtung gesehen, Schmutzlippen bildenden, Profil (6) versehen ist, **dadurch gekennzeichnet, dass** auf der dem Profil (6) radial gegenüberliegenden Seite (7) des Ansatzes (4) eine dem Profil (6) entsprechende Kontur (8) eingebracht ist.

2. Gleitringdichtung nach Anspruch 1, ausgebildet als Laufwerkdichtung.

## Claims

1. A slide ring seal at least composed of an angular slide ring (1') and/or a counter ring, the radial leg (10) of which forms a sliding zone and the axial leg (11) of which forms a seat for a trapezoidal sealing body (2) which is provided, radially outside the sliding zone, with a shoulder (4) which at least partially overlaps the radial leg (10) and forms a secondary seal, wherein the shoulder (4) is provided, at least in the area of the radial leg (10), with a profile (6) which rests upon the outer circumferential surface (12) of the radial leg (10) if the slide ring seal is installed and forms dust lips, seen in the axial direction, **characterized in that** a contour (8) corresponding to said profile (6) is arranged on the side (7) of the shoulder (4), which side is located radially opposite the profile (6).

2. A slide ring seal according to claim 1, designed as a drive seal.

## Revendications

1. Joint d'étanchéité par bague glissante au moins composé d'une bague glissante (1') et/ou d'une contre-bague angulaires, dont la branche radiale (10) forme une zone de glissement et dont la branche axiale (11) forme un logement pour un corps d'étanchéité (2) trapézoïdal lequel est muni, radialement à l'extérieur de la zone de glissement, d'un épaulement (4) qui forme un joint d'étanchéité secondaire et qui enchevauche au moins partiellement la branche radiale (10), l'épaulement (4) étant muni, au moins au niveau de la branche radiale (10), d'un profilé (6) qui s'appuie sur la surface circonférentielle extérieure (12) de la branche radiale (10) à l'état monté du joint d'étanchéité par bague glissante et qui forme des lèvres antisalissure, vu dans la direction axiale, **caractérisé en ce qu'**un contour (8) correspondant au profilé (6) est arrangé du côté (7) de l'épaulement (4), lequel côté se trouve radialement opposé au profilé (6).

2. Joint d'étanchéité par bague glissante selon la revendication 1, configuré comme garniture d'étanchéité de mécanisme de roulement.
